# EUROPEAN PATENT APPLICATION

(11) **EP 0 542 049 A2**
(43) Date of publication of application: **19.05.1993**
(21) Application number: 92118485.9
(22) Date of filing: 29.10.1992
(51) Int. Cl.: H04M 3/42, H04M 1/00

(54) **An interactive telephone**

(30) Priority: 04.11.1991 AU 9307/91; 05.12.1991 AU 9857/91; 23.04.1992 AU 2034/92
(71) Applicant: ALCATEL N.V., NL-1077 XX Amsterdam (NL); ALCATEL AUSTRALIA LIMITED, Alexandria, NSW 2015 (AU)
(72) Inventor: Fowler, Ross, Peakhurst, 2210, N.S.W. (AU); Crowe, Kevin Anthony, Bangor, 2234, N.S.W. (AU); Lagos, John, Rosebery, 2018, N.S.W. (AU); Leece, Phil, Oatley, 2223, N.S.W. (AU)
(74) Representative: Pohl, Herbert, Dipl.-Ing

(57) **Abstract**

A telephone subset is provided with a plug-in module which includes software in memory (12) to enable the subset to access exchange based facilities such as call divert and calling line identification.

The subset includes signalling circuitry (9) controlled by a microprocessor (3) in response to the software to communicate with the exchange. The microprocessor also controls an LCD (7) to display messages in the software to guide the user of the subset in accessing the exchange based facilities.

The LCD includes labelled displays to provide a continuous display indicating which facilities are activated.

The modules are interchangeable to permit access to new facilities at the exchange.

## Description

### Technical Field

This invention relates to telephone subsets and is directed to simplifying the subset user's access to exchange based facilities.

### Background Art

Subsets including processors have been available for some time. Computer controlled telephone exchanges are capable of offering users a large number of PABX style features. One such exchange is the Alcatel System 12 exchange. Some of the features available include:
Call transfer;
Conference;
Hotline
Call Control
Call back;
Camp-on busy;
Executive override;
Call-waiting;
Divert;
In order for the user to access any of these features the user must perform a sequence of operations, eg. Dial a number - await answer - Flash - await tone - Dial a second number - await answer - Flash - Dial special code.

Because there are so many options, each involving several operational steps, the user may have difficulty in remembering how to perform each operation. It is thus necessary for the user to refer to a handbook in order to use these features. This is inconvenient for the user. The handbook may also be lost, preventing the user from making use of the facilities.

### Disclosure of the Invention

This specification discloses a telephone subset including a display device controlled by a processor, in which the processor is responsive to input codes keyed in by the user via the keypad to produce prompt messages on the display to assist the user to carry out a chosen operation.

In a further embodiment, the processor is responsive to some keyed codes to control the phone's dialler circuitry to produce a series of signals representing a larger number of digits than the number of keys operated by the user.

In a preferred embodiment there is disclosed a telephone subset for use in association with a telephone exchange having one or more subscriber controlled facilities,
- the subset including a processor, a memory associated with the processor, the memory containing one or more program routines selectable by the user, each program routine enabling the processor to access and operate interactively with the user a corresponding subscriber controlled facility at the exchange,
- the subset including a display on which the processor initiates prompt messages from a selected program routine to prompt the user to carry out a required action in a sequence of actions required to access or operate the corresponding facility at the exchange, wherein the subset includes signal transmission means to transmit messages to the exchange.

Preferably, the telephone includes an acknowledge signal receiver to receive acknowledgment signals from the exchange when the exchange accepts a message from the telephone.

In a further embodiment, the telephone's processor compiles messages for the exchange from an identification code header stored in the memory and from data entered by the user, the header enabling the exchange to identify the facility which the user wishes to access.

In an alternative embodiment, components for implementing the features are contained in a plug-in module which can be plugged into a socket provided in a telephone subset.

Different plug-in modules are provided to give access to different exchange based facilities or combinations of such facilities.

In another embodiment the display includes labelled feature identifiers which are controlled by the processor to indicate whether or not the feature associated with the identifier is activated.

### Brief Description of the Drawings

Figure 1 shows a telephone subset incorporating the elements of the invention.

Figure 2 shows a keypad suitable for use with the subset of the present invention.

Figure 2a shows an alternative keypad.

Figures 3 to 5 are flow diagrams of operations performed by the processor interacting with the user and the exchange.

Figures 6 to 14 show interaction charts for operations performed by the user, the processor and the exchange.

### Best Mode of Carrying Out the Invention

The invention will be described with reference to the drawings.

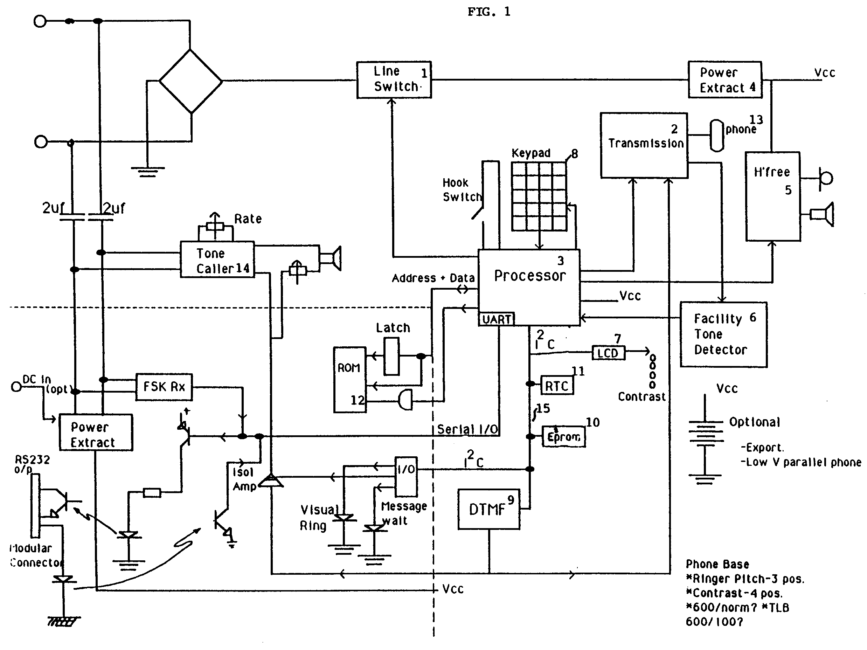

Figure 1 shows a telephone subset including: a line switch 1 controlled by a processor 3; a transmission circuit 2 performing the usual subset transmission circuit functions and controlled by processor 3; a hands-free circuit 5 also controlled by processor 3; power extraction circuit 4 providing power for the subset; a display 7 controlled by processor 3; a keypad 8 connected to processor 3; a DTMF (dual tone multifrequency) generator 9 connected to the processor via a communication bus 15 (eg. a Philips I²C bus); a real time clock 11 connected to bus 15; and a first RAM memory, eg. an EEPROM 10 connected to bus 15.

The subset includes a second memory ROM 12 capable of storing operating instructions which can be called up by the processor 3 in response to instructions entered by the user via keypad 8.

The ROM 12 contains a series of routines which the processor 3 implements when the appropriate functions are selected by the user. The RAM 10 contains input data which the user can change by selecting appropriate functions.

Each routine is called up by the processor in response to the user pressing the corresponding function button, eg. DIVERT. The general form of a routine is then to illuminate a function bar on the display and to cause an appropriate message to be displayed. The message may be a prompt requiring the user to enter, eg., a destination for call diversion. When the user has entered the number and initiated the next operation of the processor, eg. by pressing DIVERT again, the processor initiates the transmission of a message to the exchange over the phone line. The message may include an initial header advising the exchange of the nature of the message (eg. change DIVERT destination, or activate DIVERT), and where necessary the new number to be recorded by the exchange in an appropriate register.

In addition, the subset includes a tone detector 6 adapted to receive an acknowledgement signal sent from the exchange when the exchange has received a set of instructions from the phone. The tone may be, eg. 425 Hz for a defined duration. The tone may first be fed through the transmission circuit.

One feature which is available with modern telephone exchanges is incoming call identification. The exchange transmits the digits of the calling number or identification of the calling party, using eg. FSK signals. The subset can be equipped with an FSK decoder 16 which decodes the incoming digits and/or characters and sends them via serial I/O bus 17 for display on the LCD. Processor 3 may also be programmed to compare the incoming digits and/or characters with phone numbers and/or names stored in EEPROM 10. If the numbers and/or characters match the processor may initiate a specific ringing signal by varying the duration or tone of the acoustic ring signal.

The telephone can be equipped with circuitry which sends the decoded FSK signals, eg. via serial I/O link 17, to an external computer for further processing. The external computer can control the telephone operation through the same interface. Optical isolators 18 and 19 connected to modular connector 20 may be used for this purpose.

In order to provide an audible incoming call identification, one option includes the use of the DTMF generator to produce a range of different tone calls which can be used to identify calls from particular telephone subsets which can be recognised by an incoming call identification facility at the call destination. Via a control signal on bus 15 and interface circuit 20, the DTMF output is amplified in amplifier 13 and applied to transducer 23. In this way a limited number of frequent callers can be identified by characteristic ringing modulation.

Other means of producing a controllable calling tone could employ a VCO controlled oscillator controlled by the processor.

Also via lens 15, the processor can activate "Message Waiting" and "Visual Ring" diodes 21 and 22.

Some or all of the components delineated by the dashed lines in the bottom left of Figure 1 may be incorporated in a plug-in module, connections being made to the lines intersected by the dashed lines.

In one embodiment the plug-in module may contain a ROM programmed during manufacture to hold processor instructions, display prompts and codes to access exchange services. The module also includes a RAM for temporary storage of data such as a last number redial stack, and the status of the network services.

In addition the module may contain tone caller circuitry to enable the distinctive ring feature to be implemented by the module circuitry.

In the case where the exchange supports calling line identification (CLI), the exchange will transmit the calling number to the subset. If the phone is equipped with a CLI module the calling number is stored in the RAM and displayed on the LCD. Date and time of the call can be stored and the user may scroll through the stored information.

Thus messages displayed on the LCD can originate from preprogrammed text messages stored in the ROM, numbers entered into memory by the user, and, as in the case of CLI, information sent from the exchange.

In this embodiment, the instructions stored in ROM and/or the additional circuitry can be changed by changing the plug-in module. Thus the programs and/or circuitry to run different facilities or different combinations of facilities can be changed.

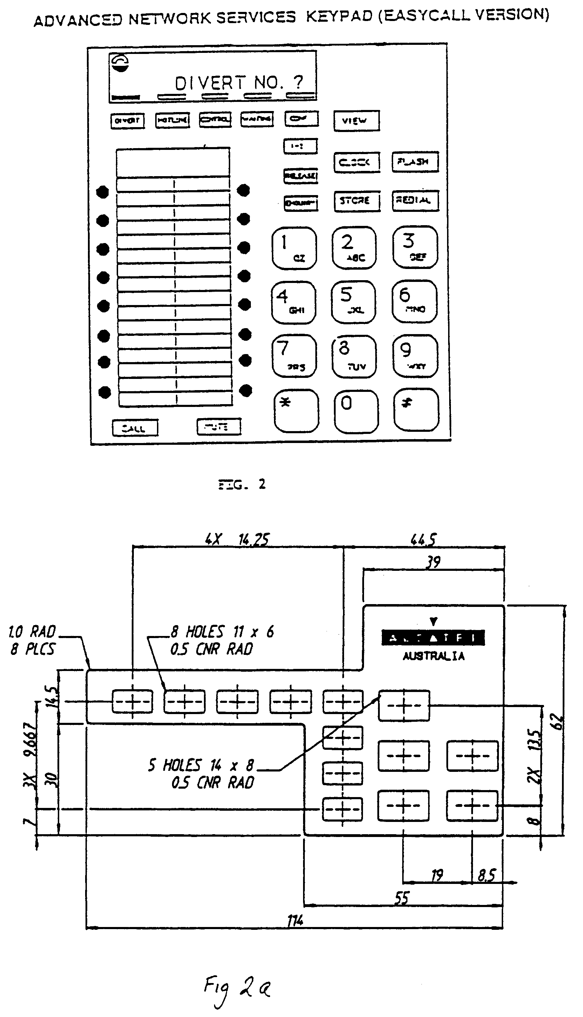

With reference to Figure 2, the keypad comprises the standard numerical keypad 0 to 9 with * and # function buttons. In addition there is an array of memory buttons and several dedicated function buttons. The memory buttons are usually associated with a name tag on which the name and number of the stored telephone destination are written. The dedicated function buttons have the function inscribed on the button. Alternatively, the function buttons may have assignable functions and utilize an overlay template which is supplied with plug-in modules in order to customize the telephone to particular network services (Figure 2a). In one option where it is desired to increase the number of dedicated function buttons, some of the memory buttons may be converted for this purpose. The selected buttons can be arranged to call up corresponding program routines stored in ROM 12.

The subset may be programmed to store a number of frequently called numbers by lifting the handset, pressing the "STORE" function button, "dialling" the number to be stored, and pressing one of the memory buttons. These numbers are stored in the first memory 10 via processor 3 and can be dialled by pressing the appropriate memory button. This addresses the number stored in memory 10 and the number is read out to cause the DTMF generator 9 to generate the corresponding dialling code. When particular functions are to be performed the present subset simplifies the operation. At present a number of actions need to be performed by the user. According to the invention a series of instructions, including timing instructions and switch-operation instructions, are stored in the memory 12 together with display information which is provided to the display 7, and which prompts the user as to the sequence of operations to be performed. The appropriate set of instructions can be accessed by selection of the appropriate function buttons on keypad 8. The processor 3 implements these instructions to cause the subset to perform the necessary operations and to send appropriate instructions to the exchange to cause the exchange to perform the required function.

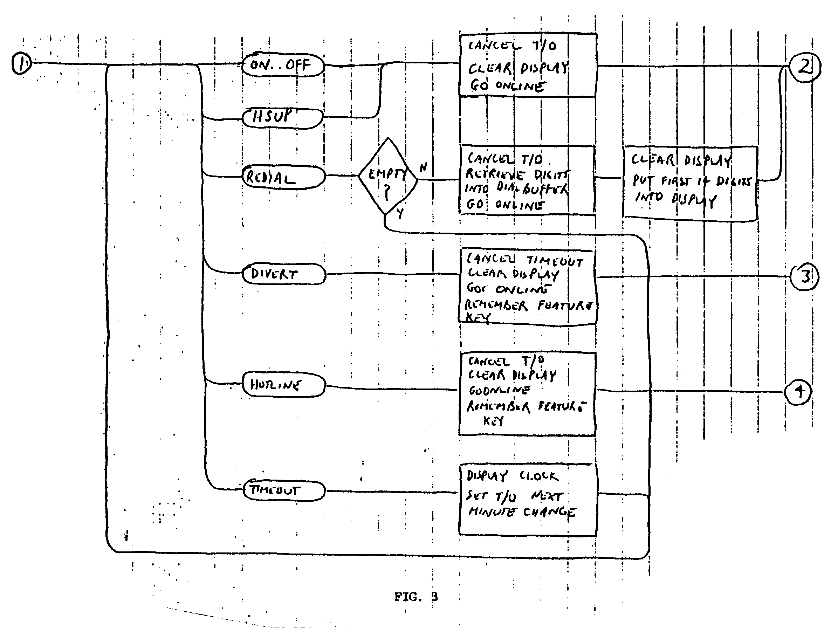

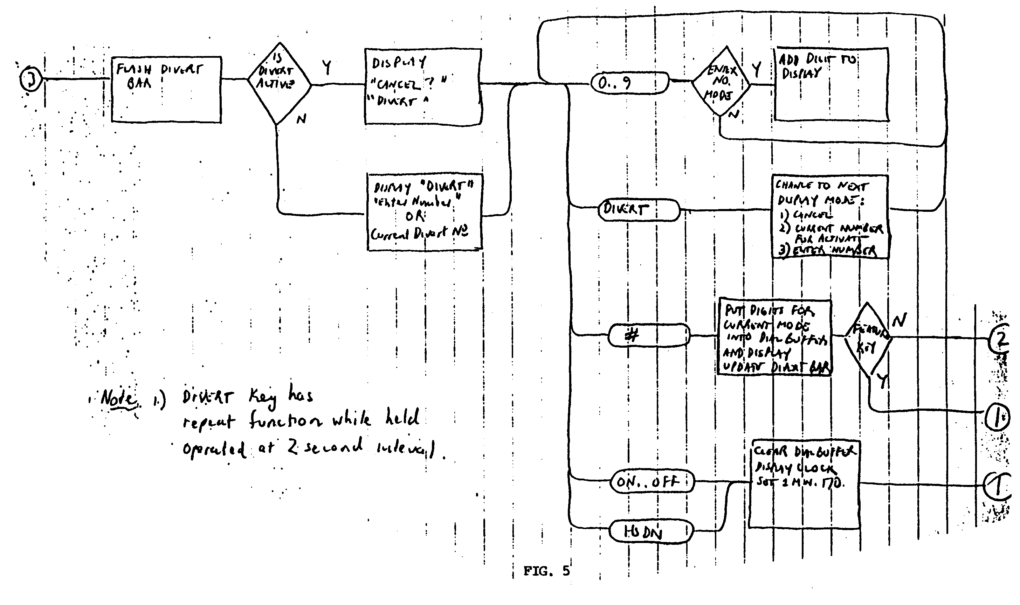

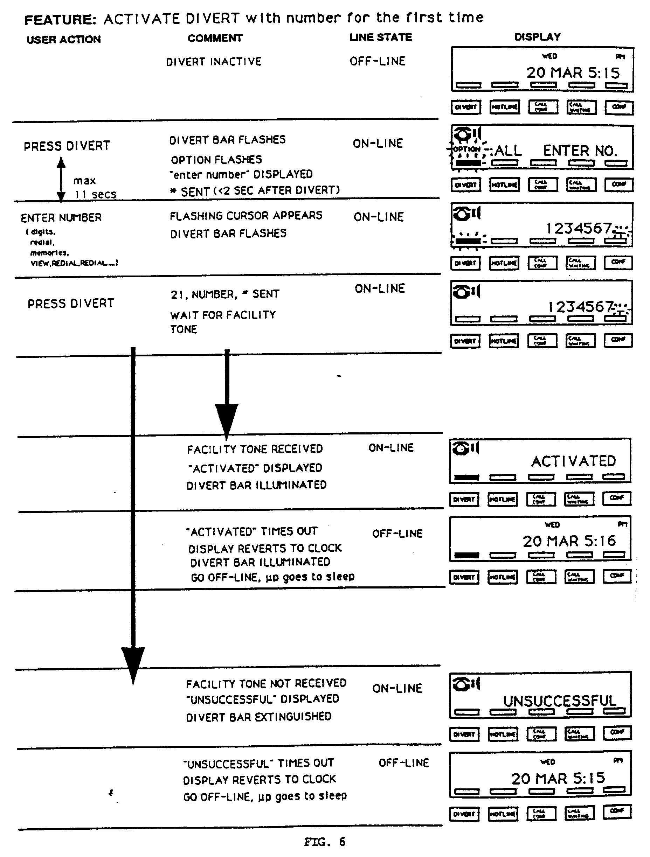

Figures 3 to 5 are flow charts representing the operation of some of the functions available, and Figures 6 to 14 are interaction charts illustrating user operation and the interaction with LCD display 7, in performing several functions including:
Figure 6 Divert: initial operation;

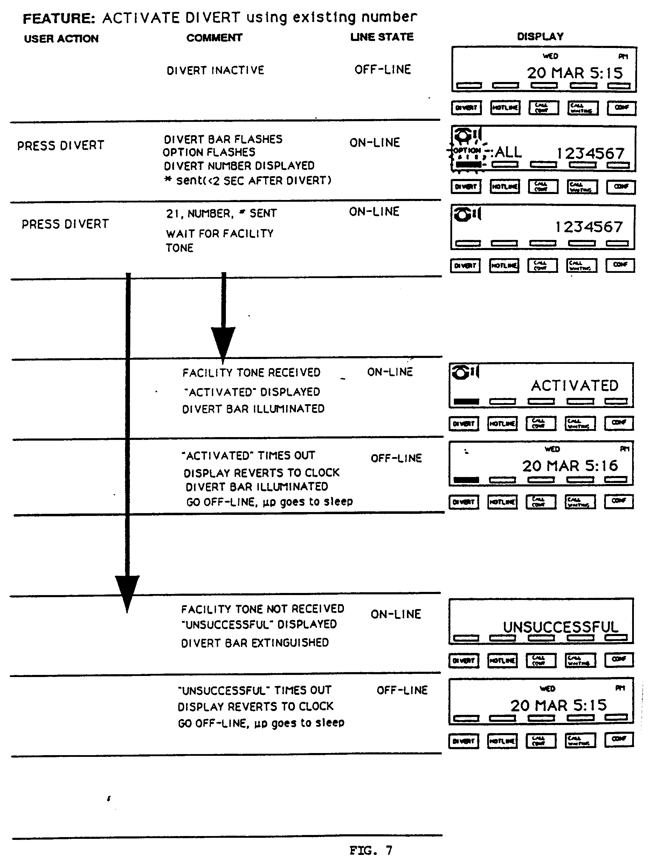

Figure 7 Divert: with number in divert register in EEPROM 10;

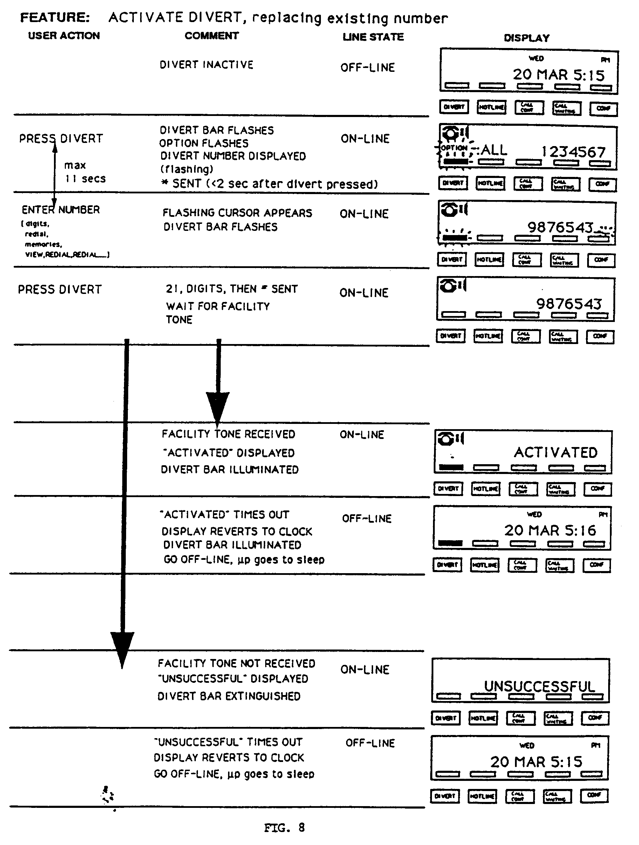

Figure 8 Divert: change number in divert register;

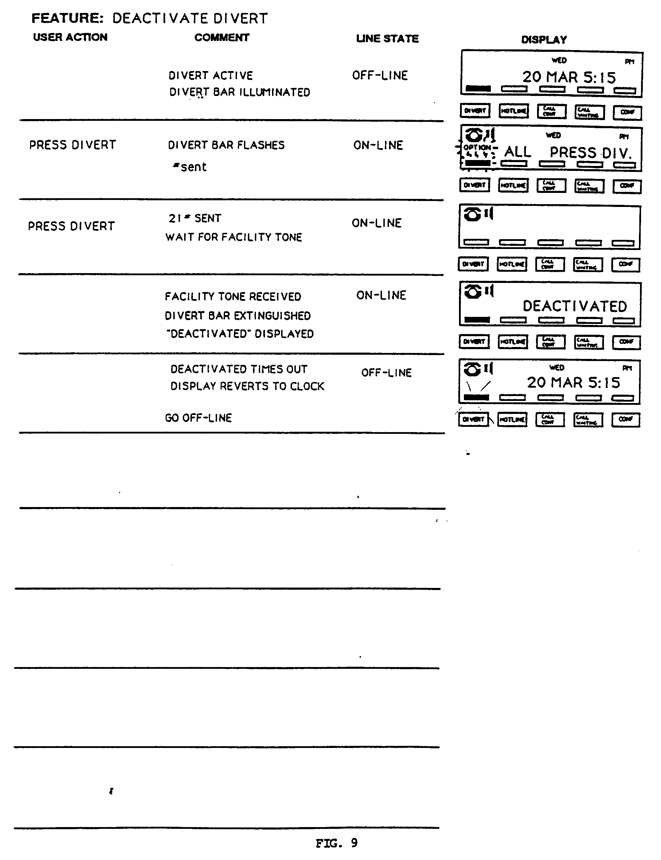

Figure 9 Divert: deactivate divert;

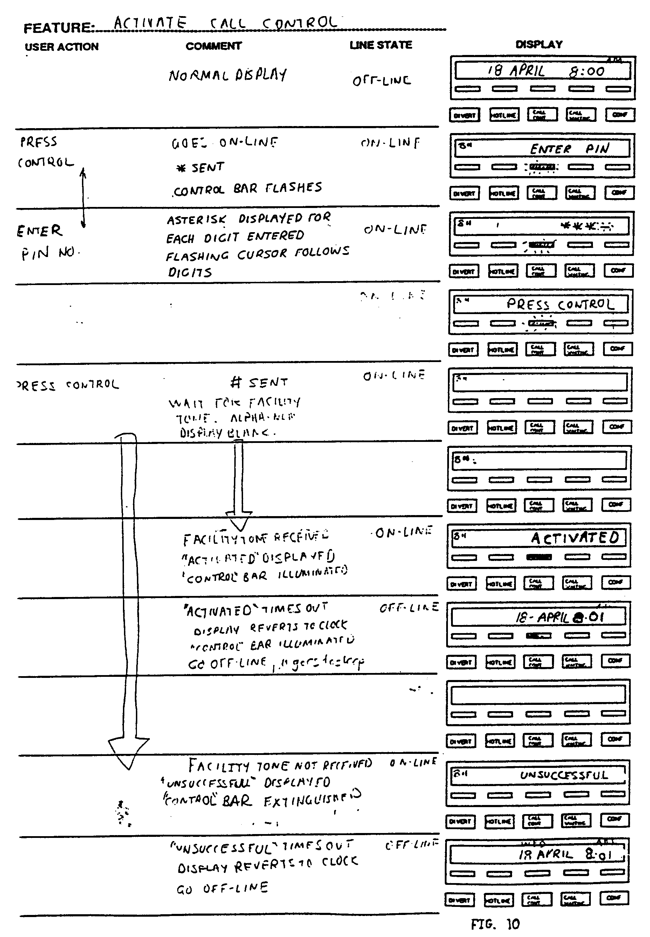

Figure 10 Call control: activate;

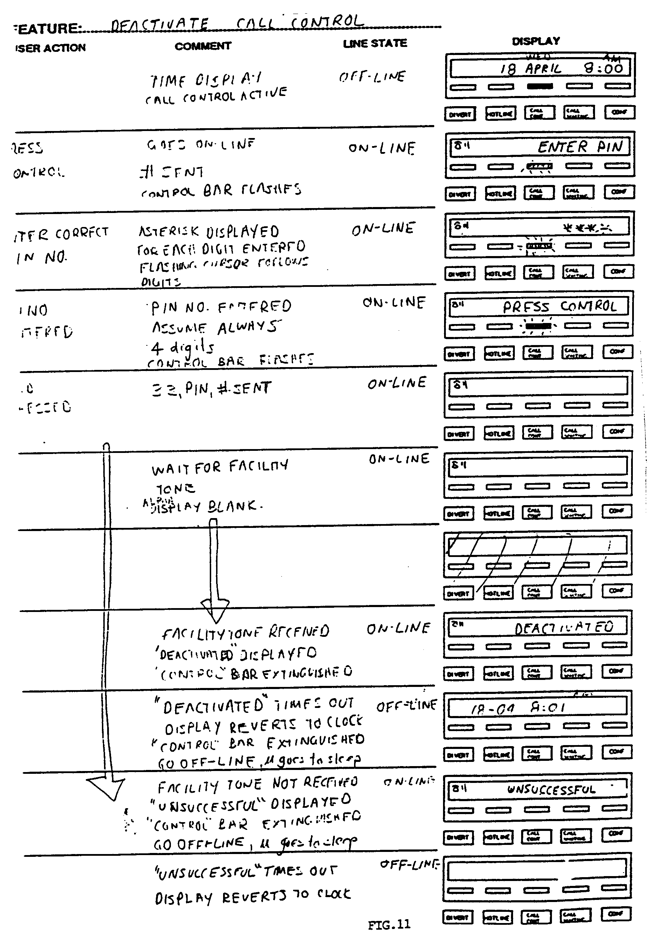

Figure 11 Call control: deactivate;

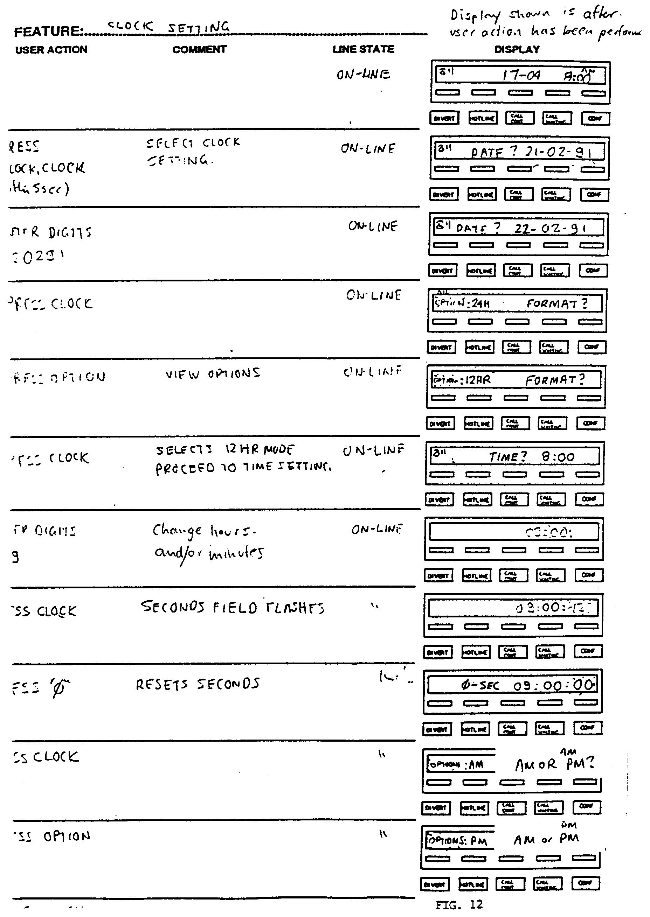

Figure 12 Clock setting;

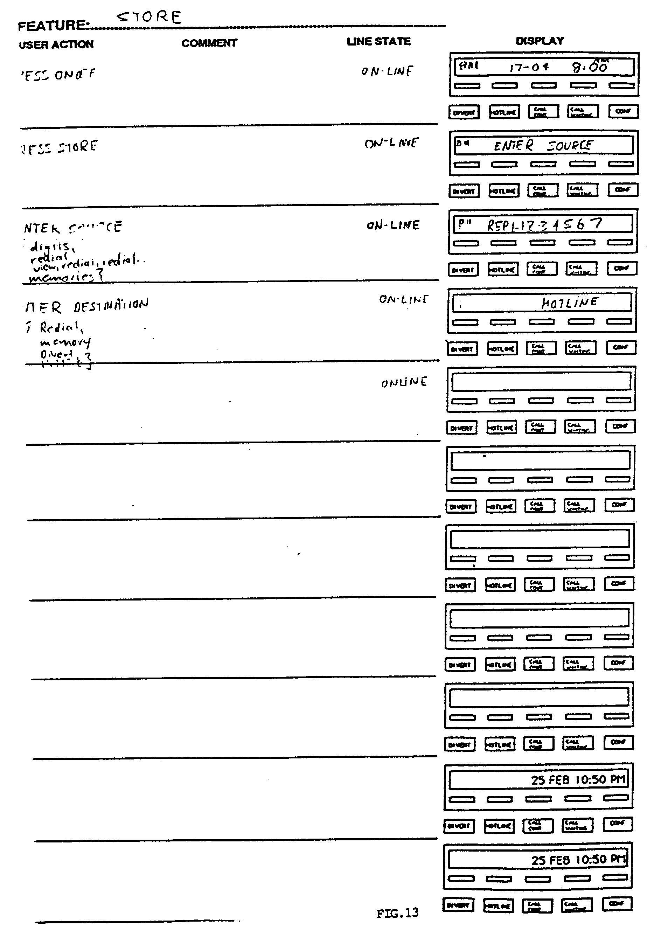

Figure 13 Store;

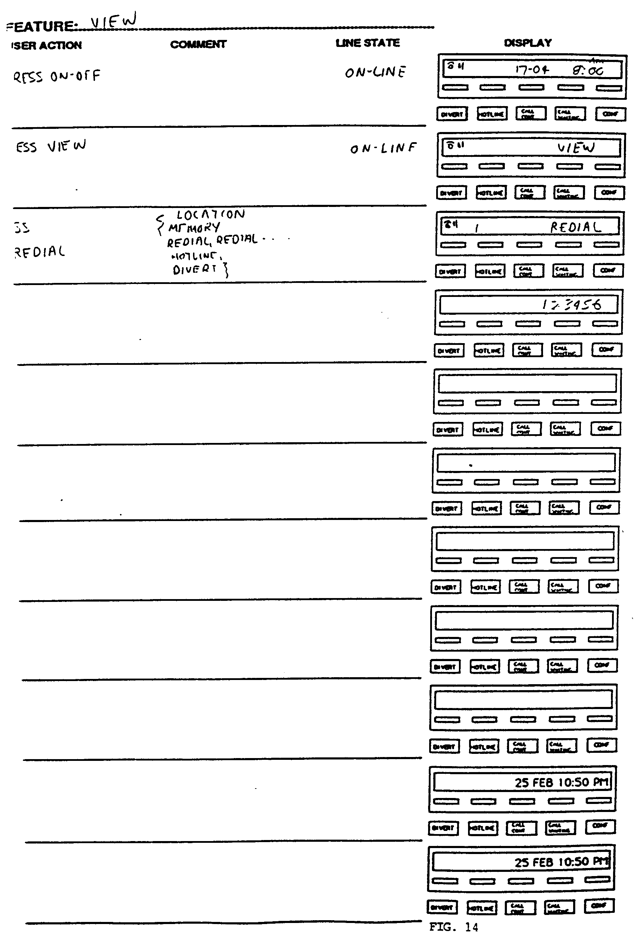

Figure 14 View.

The layout of display 7 includes a changeable display area in which date, time, phone numbers, user prompt messages, acknowledgement messages, and a cursor can be displayed. Under this area are several bars which are associated with adjacent push buttons. The bars are switched on when an operation relating to the corresponding push button is active. The bars flash when the user is required to operate the corresponding button.

With reference to Figure 6, the initial operation of the DIVERT function will be described.

Initially the LCD displays date and time.

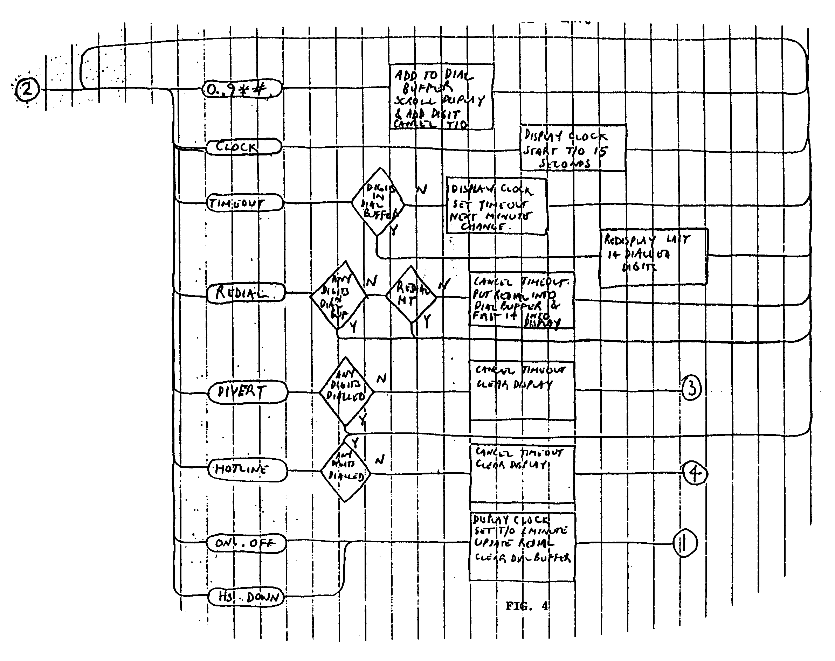

The user presses the Divert button. This causes the processor 3 to commence its divert routine (Figures 3 and 4). The processor cancels time out, clears the display, goes on line via line switch 1, causes the DIVERT bar on the display to flash and, if the divert register in EEPROM 10 is empty, displays a prompt to the user to enter the new destination to which calls are to be diverted.

The flashing cursor is displayed and the user enters the number.

The user then presses the Divert bar and the subset sends the divert code and destination to the telephone exchange. If the exchange accepts the message it sends a message, eg. a tone signal, to the subset. This message is detected by the tone detector 6 which notifies the processor that the divert facility is activated and the processor initiates the Divert Activated message on display 7. After a preset time period, the Activated notice times out, the Divert bar on the display remains on, and the processor switches the subset OFF LINE via line switch 1.

If the exchange does not indicate that the Divert facility has been activated within a given time, the processor initiates the UNSUCCESSFUL display, this is timed out, the display reverts to CLOCK, the subset goes OFF LINE, and the processor resumes its quiescent mode.

Figure 7 illustrates the user/display interaction when there is a Divert number stored in the exchange and EEPROM 10. When the user presses Divert, the processor identifies the number in the divert register, displays the number, and flashes the Divert bar and goes ON LINE. The user again presses the Divert button and the subset transmits the Divert activation message to the exchange.

If the exchange accepts the message it sends it acknowledge message which is detected in detector 6. This causes the processor to initiate the Divert Activated display which is then timed out leaving the Divert bar illuminated, the subset goes OFF LINE, and the processor resumes its quiescent state.

An unsuccessful attempt is treated as previously described.

Figure 8 illustrates the changing of a divert destination. The user presses the divert button and as previously described the existing destination number is displayed and the subset goes ON LINE.

The user then enters the new destination by pressing individual digits, redial, memory as appropriate and the new destination is displayed.

The user again presses Divert and the new destination is sent to the exchange in a Divert message.

If the change is successful, this is acknowledged as previously described.

Similarly, an unsuccessful attempt is registered as previously described.

The procedure to deactivate Divert is described with reference to Figure 9.

The initial state has the Divert bar lit in the display 7. This means that calls for the subset are intercepted at the exchange and sent to the destination which the user has recorded as previously described.

If the user wishes to receive incoming calls he presses Divert and this causes the Divert bar to flash and the subset to go on line. The processor brings up a "Press Div(ert)" display. The user presses Divert and the processor initiates the Divert deactivate message to the exchange. The message acknowledge signal is sent from the exchange and causes a Divert Deactivated display. The display is timed out, the Divert bar is switched off and the subset goes OFF LINE.

In a further refinement, the DIVERT function may be arranged to operate in three different modes:
- immediate;
- no answer after three rings; and
- busy line.

The user selects the preferred mode of operation in response to prompt messages displayed on the LCD. The processor then responds by initiating the DIVERT routine when the appropriate conditions are not. Thus the processor must monitor the ring signal or busy line conditions if either of these DIVERT modes is selected. The busy line information is available in the processor from the hook switch input and the ring signal may be monitored in a known manner.

Call control may be used to restrict access to certain numbers, eg. IDD/STD, so only authorised users with a proper PIN can access the numbers.

Call control activation is shown in Figure 10. The user presses the call control button and initiates the call control routine. The processor causes the prompt "ENTER PIN" to be displayed with the Call Control bar, and the subset goes ON LINE.

The user enters a PIN number and the display shows an asterisk for each digit entered.

The display is then changed to "PRESS CONTROL". The user presses the Call Control button and the processor responds by sending a call control code and the PIN to the exchange.

If the exchange accepts the message and recognises the PIN as one stored at the exchange for that subscriber, an acknowledgement message is sent to the subset and the processor initiates the Call Control ACTIVATED display. After the time out period the display reverts to CLOCK, the Call Control bar remains illuminated, the subset goes off-line, and the processor resumes the quiescent state.

If the exchange does not send the acknowledgement message, the "Unsuccessful" routine previously described is followed.

Call control is deactivated as shown in Figure 11. The operation of this function is clearly illustrated in the drawing and needs no further explanation in view of the foregoing discussion of other functions. Similarly the clock setting function Figure 12, store function Figure 13, and view function Figure 14 do not require further description as the operations are clear from the foregoing description.

Preferably the instructions are stored in the form of look-up tables containing status indications of elements in the subset. Thus when a function key is operated the processor 3 first identifies the present condition of the phone and can then check the conditions required to comply with the instruction from the function key. The processor 3 controls the changeover to the new function by checking the various status indications and changing those necessary. The function key selected may still require interaction with the user and user prompts are displayed on the LCD 7. These prompts are stored in Memory 12 and read out by processor 3 in response to specific events. In the case of call-forward the instruction displayed on the LCD 7 is to enter the number to which the call is to be forwarded. This would be displayed in response to a signal from the exchange that it is ready to receive the new number.

The look-up tables have the advantage of being easy to alter. Thus, eg., if undesirable switching noise is produced in the earpiece during a function operation, the duration of a mute signal could be extended to prevent the noise being heard.

### Industrial Applicability.

This invention is used to permit a telephone user to have simplified access to functions provided at a remote exchange. The functions may be provided in a telephone exchange or a PABX.

## Claims

1. A telephone subset for use in association with a telephone exchange having one or more subscriber controlled facilities,
the subset including a processor connected to a first communication bus;
a first memory connected to the first bus whereby the processor has access to the contents of the first memory;
a display device connected to the first bus, the display being controlled by the processor;
a line signal generator connected to the first bus, the generator being controlled by the processor;
a keypad whose output is applied to the processor whereby information stored in the memory can be selected via the keypad, and whereby information can be entered into the memory via the keypad;
a second memory connected to the processor, the second memory containing instructions to enable access to the facilities in the telephone exchange under the control of the keypad, the instructions including prompt messages which the processor extracts from the second memory and causes to be displayed by the display device; and
signal transmission means to transmit information entered via the keypad in response to the prompt messages to the telephone exchange.

2. A telephone subset as claimed in claim 1 including signal receiving means to receive signals from the telephone exchange.

3. A telephone subset as claimed in claim 2 wherein the output of the signal receiving means is connected to the first bus.

4. A telephone subset as claimed in any one of claims 2 or 3 wherein the signals from the exchange include information which the processor causes to be displayed by the display means.

5. A telephone subset as claimed in any one of claims 2 to 4, wherein the telephone exchange transmits signals identifying the number of the calling party to the subset and the processor compares the number with a list of numbers stored in the first memory and if the number matches a number on the list, the processor controls audible ringing signal means to produce a specific ring signal associated with this number.

6. A telephone subset as claimed in claim 5 including a DTMF signalling circuit whose output is applied to an acoustic transducer wherein the memory contains a look-up table containing a list of selected calling party numbers, each listed calling party number being associated with a corresponding DTMF signal, the processor initiating a corresponding DTMF signal to the acoustic transducer when an associated calling party number is received.

7. A telephone subset as claimed in any one of claims 1 to 6 wherein the telephone exchange transmits receive acknowledgment signals to the subset and the processor responds by initiating a prompt message.

8. A telephone subset as claimed in any one of claims 1 to 7 wherein the second memory contains first exchange instructions to be sent to the telephone exchange in response to commands entered via the keypad, second exchange instructions to be sent to the exchange in response to messages from the exchange, first prompt signals initiated by commands entered via the keypad, and second prompt signals initiated by messages from the exchange.

9. A telephone subset as claimed in claim 8 wherein the exchange transmits one or more display messages to the subset during access to an exchange based facility, and the or each display message is displayed by the display device.

10. A telephone subset as claimed in any one of claims 1 to 9 wherein the second memory is contained in a plug-in cartridge and the subset contains a mating socket.

11. A telephone subset as claimed in any one of claims 1 to 10 wherein the second memory contains instructions to implement one or more of the following features:
Call transfer;
Conference;
Hotline;
Call Control;
Call back;
Camp-on busy;
Executive override;
Call-waiting;
Divert;

12. A telephone subset as claimed in any one of claims 1 to 11 wherein the display includes one or more labelled feature identifiers which are controlled by the processor to provide a continuous indication of whether or not the labelled feature is activated.

13. A telephone subset as claimed in claim 12 including a corresponding latching circuit associated with each identifier, each latching circuit being controlled by the processor.

14. A telephone subset substantially as herein described with reference to the accompanying drawing.

15. A method of accessing exchange based facilities using a telephone as claimed in any one of claims 1 to 14, the method including the steps of providing in the second memory a set of instructions which the processor can access in response to commands from the keypad, the instructions including prompt messages which are displayed on the display device to instruct the user as to the action necessary to access the facility which the user has chosen.

16. A method as claimed in claim 15 wherein the instructions include function instructions which are transmitted to the exchange to enable access to the chosen facility.

17. A method as claimed in claim 16 wherein the function instructions correspond to the operation of one or more buttons of the keypad.

18. A method of accessing exchange based facilities from a subset as claimed in any one of claims 15 to 17, the method being substantially as herein described with reference to the accompanying drawings.

19. A telephone subset for use in association with a telephone exchange having one or more subscriber controlled facilities,
- the subset including a processor, a memory associated with the processor, the memory containing one or more program routines selectable by the user, each program routine enabling the processor to access and operate interactively with the user a corresponding subscriber controlled facility at the exchange,
- the subset including a display on which the processor initiates prompt messages from a selected program routine to prompt the user to carry out a required action in a sequence of actions required to access or operate the corresponding facility at the exchange, wherein the subset includes signal transmission means to transmit messages to the exchange.

20. A telephone subset as claimed in any one of claims 1 to 13, including an acknowledge signal receiver to receive acknowledgement signals from the exchange when the exchange accepts a message from the subset.

21. A telephone subset as claimed in any one of claims 1 to 13 or 19 or 20 wherein the processor compiles messages for the exchange from an identification code header stored in the memory and from data entered by the user, the identification code header enabling the exchange to identify the subscriber controlled facility which the user wishes to access.

22. A subset as claimed in any one of claims 1 to 13 or 19 to 21 wherein the memory and/or additional circuitry is contained in a plug-in module which is plugged into an externally accessible socket in the telephone subset.
